(19) **Europäisches Patentamt / European Patent Office / Office européen des brevets**

(11) **EP 2 489 089 B1**

(12) # EUROPEAN PATENT SPECIFICATION

(45) Date of publication and mention
of the grant of the patent:
**18.09.2013 Bulletin 2013/38**

(51) Int Cl.:
**H01M 4/88** (2006.01)  **H01M 4/92** (2006.01)
**H01M 8/10** (2006.01)

(21) Application number: **09744781.7**

(86) International application number:
**PCT/JP2009/068218**

(22) Date of filing: **16.10.2009**

(87) International publication number:
**WO 2011/045869 (21.04.2011 Gazette 2011/16)**

(54) **METHOD FOR PRODUCING ELECTRODE CATALYST FOR FUEL CELL**

VERFAHREN ZUR HERSTELLUNG EINES ELEKTRODENKATALYSATORS FÜR EINE BRENNSTOFFZELLE

PROCÉDÉ DE FABRICATION DE CATALYSEUR D'ÉLECTRODE POUR PILE À COMBUSTIBLE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**22.08.2012 Bulletin 2012/34**

(73) Proprietors:
• **TOYOTA JIDOSHA KABUSHIKI KAISHA**
**Toyota-shi, Aichi-ken, 471-8571 (JP)**
• **Helmholtz-Zentrum Berlin für Materialien und Energie GmbH**
**14109 Berlin (DE)**

(72) Inventors:
• **TAKAHASHI, Hiroaki**
**Toyota-shi,**
**Aichi-ken, 471-8571 (JP)**

• **HERRMANN-GEPPERT, Iris**
**Hamburg 22043 (DE)**
• **ZEHL, Gerald**
**Berlin 12435 (DE)**
• **BOGDANOFF, Peter**
**Berlin 14193 (DE)**
• **FIECHTER, Sebastian**
**Berlin 14109 (DE)**

(74) Representative: **Kuhnen & Wacker**
**Patent- und Rechtsanwaltsbüro**
**Prinz-Ludwig-Straße 40A**
**85354 Freising (DE)**

(56) References cited:
**WO-A-2009/075037     US-A1- 2009 192 030**

EP 2 489 089 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention provides a method for producing an electrode catalyst for a fuel cell having good catalytic activity.

Background Art

Fuel cells produce electricity through electrochemical reactions between hydrogen and oxygen, so that the product produced in association with electricity generation is principally water alone. Fuel cells have therefore drawn attention as clean electricity generation systems that impose almost no burden on the earth environment. Fuel cells are classified based on the types of electrolyte into a polymer electrolyte fuel cell (PEFC), a phosphoric acid fuel cell (PAFC), a molten-carbonate fuel cell (MCFC), and a solid oxide fuel cell (SOFC).

For polymer electrolyte fuel cells, in general, an electrode catalyst comprising conductive particles, such as carbon particles, and metal fine particles having catalytic activity, such as platinum or a platinum alloy, loaded on the conductive particles is used.

When a catalyst metal component is an alloy containing two or more types of metal element, a step (alloying) is carried out for forming an alloy by heat treating a plurality of metals introduced into conductive carrier particles under an inert gas atmosphere at a high temperature between 500°C and 1000°C (Patent Document1).

Also, when a catalyst metal component is a metal comprising 1 type of element such as platinum, metal fine particle- loaded conductive carrier particles may be heat treated under an inert gas atmosphere at a high temperature between 500°C and 1000°C for the purpose of stabilizing the metal fine particles or improving the adhesiveness of the metal fine particles to the conductive carrier particles. For example, Patent Document 2 discloses that for the purpose of stabilizing the interface between metal particles and carbon black (conductive carrier) through the removal of functional groups such as carboxyl groups existing on the surface of carbon black, carbon black is heat treated before or after catalyst metal loading in an inert gas atmosphere at 700°C or higher or a reducing gas atmosphere at 500°C or higher.

However, heat treatment carried out at a high temperature between 500°C and 1000°C after catalyst metal fine particle loading onto conductive carrier particles is problematic in that loaded metal particles move over the surfaces of conductive carrier particles to aggregate (sintering) and then the particle size of metal particles increases. For example, Patent Document 2 discloses that it is desired to carry out heat treatment for carbon black that has been subjected to platinum loading under a reducing gas atmosphere in order to suppress such aggregation (sintering) of platinum particles. This is also problematic in that when sintering takes place and the size of catalyst metal particles increases, the reaction surface area of the catalyst metal is reduced, leading to insufficient catalytic activity and reduction in fuel cell performance.

For the purpose of addressing such problem of the size increase of loaded catalyst metal fine particles, various technologies have been developed.

Patent Document 2 discloses a technology for suppressing the growth of platinum fine particles upon fuel cell operation by loading metal particles, which are more difficult to be oxidized than platinum under acidic conditions, on conductive carbon materials, so as to coat the outer surfaces of the metal particles with platinum.

Patent Document 3 discloses that a base metal component is introduced using a complex compound prepared with a chelator having a given chelate stabilization degree in order to solve the problem of the size increase of alloy particles resulting from heat treatment upon alloying.

Patent Document 4 discloses that an organic compound having a proton conductive functional group is used as an agent for suppressing aggregation in order to suppress the aggregation of platinum or platinum alloy particles when platinum or platinum alloy particles are loaded on carbon carriers by mixing colloid particles of platinum or a platinum alloy with carbon carriers. The organic compound remains in the catalyst without being removed.

Patent Document 5 discloses that for the purpose of suppressing platinum particle aggregation in a method for loading platinum particles on carbon carriers by mixing platinum colloids with carbon carriers, such mixing is carried out in the presence of a cation exchange polymer. The cation exchange polymer remains in the catalyst without being removed.

Patent Document 6 discloses nanoparticle-containing complex porous materials that contain porous materials (e.g., carbon porous materials) having solid skeletal parts and pores and inorganic nanoparticles (e.g., catalyst metal fine particles) loaded on the solid skeletal parts. According to Patent Document 6, nanoparticles can be loaded as complex particles coated with an organic aggregate such as a spherical shell protein or a dendrimer. Furthermore, Patent Document 6 also discloses that such organic aggregate may be decomposed and removed.

Patent Document 7 discloses a method which forms platinum particles onto an in-situ formed carbon matrix by heating a mixture of a PtNx ($2 \leq x \leq 4$) organic precursor together with a forming agent. While this method includes a step of mixing a platinum-based PtNx centre catalyst material with a pore-forming agent, it does not limit the PtNx center catalyst material to be supported on conductive particles.

Patent Document 1: JP Patent Publication (Kokai) No. 2004-335328 A
Patent Document 2: JP Patent Publication (Kokai) No. 2002-289208 A
Patent Document 3: JP Patent Publication (Kokai) No. 2001-68120 A
Patent Document 4: JP Patent Publication (Kokai) No. 2001-93531 A
Patent Document 5: JP Patent Publication (Kokai) No. 2003-100306 A
Patent Document 6: WO2004/110930
Patent Document 7: WO2009/075037

Summary of the Invention

Objects to be Achieved by the Invention

Conventional methods for suppressing the growth of the size of catalyst metal fine particles on conductive carrier particles of an electrode catalyst for a fuel cell are all unsatisfactory. For example, the technology disclosed in Patent Document 2 is problematic in that catalyst metal's own composition to be employed is limited. The technology of Patent Document 3 requires the use of a given chelator for introduction of a metal. The technologies disclosed in Patent Documents 4 to 6 require special agents for suppressing aggregation. Furthermore, according to the technologies of Patent Documents 4 and 5, an agent for suppressing aggregation should be caused to remain, so that they are problematic in that they cannot be applied when alloying is carried out after metal loading by high temperature treatment.
Therefore, an object to be achieved by the present invention is to provide a universal technology that is not limited by the composition of a specific catalyst metal or a loading method for the same and that makes it possible to suppress the size increase of catalyst metal fine particles upon heat treatment of catalyst metal fine particle- loaded conductive particles.

Means for Attaining the Object

The present inventors have surprisingly discovered that the above object can be achieved with the following constitutions. The present invention encompasses the following (1) to (4).

1. A method for producing an electrode catalyst for a fuel cell, comprising the steps of:

mixing conductive particles loaded with catalyst metal fine particles with an organic compound wherein the organic compound is 2- methyl- 2, 4- pentane diol, and the amount thereof ranges from 0.3 wt% to 1.5 wt% based on the weight of the conductive particles loaded with catalyst metal fine particles; and

heat treating the mixture formed in the mixing step under an inert gas atmosphere, so as to carbonize the organic compound.

2. The method according claim 1, wherein the heat treatment step is carried out at a temperature between 450°C and 850°C.

3. The method according to claim 1 or 2, wherein the organic compound contains at least one further catalyst metal.

4. The method according to any one of claims 1 to 3, wherein the mixing step comprises mixing the conductive particles loaded with catalyst metal fine particles with the organic compound dissolved in a solvent and removing the solvent after mixing.

Brief Description of the Drawings

Figure 1 shows the relationship between the temperature for heat treatment of an electrode catalyst comprising platinum-loaded carbon particles and loaded with an organic compound and the size of platinum particles after heat treatment.
Figure 2 shows the relationship between the temperature for heat treatment of an electrode catalyst comprising platinum-loaded carbon particles and loaded with an organic compound and the size of platinum particles after heat treatment.

Figure 3 shows the relationship between the temperature for heat treatment of an electrode catalyst comprising platinum-loaded carbon particles and loaded with an organic compound and the catalytic activity of the electrode catalyst after heat treatment.

Figure 4 shows the relationship between the amount of 2- methyl- 2, 4- pentanediol (MPD) loaded on an electrode catalyst comprising platinum- loaded carbon particles and the size of platinum particles after heat treatment.

Figure 5 shows the relationship between the amount of 2- methyl- 2, 4- pentanediol (MPD) loaded on an electrode catalyst comprising platinum- loaded carbon particles and the catalytic activity of the electrode catalyst after heat treatment.

Best Mode for Carrying Out the Invention

1. Conductive particles

Conductive particles to be used as carriers are not particularly limited, as long as catalyst metal fine particles can be loaded and they have own conductivity. Various materials conventionally used for electrode catalysts for fuel cells can be used herein. For example, a carrier material having conductivity and a large specific surface area, such as carbon black, is preferred. The specific surface area of conductive particles preferably ranges from 200 $m^2$/g to 2,000 $m^2$/g. Specific surface area can be measured by $N_2$ adsorption (commonly known as a BET method). Examples of preferred conductive particles include, but are not limited to, carbon carrier particles such as Ketjen EC (trademark: Ketjen Black International), Ketjen 600JD (trademark: Ketjen Black International), and Black Pearls (trademark: Cabot).

Catalyst metal fine particles are loaded on conductive particles. Here, the term "fine particle(s)" refers to metal particles having an average particle size ranging from 1.0 nm to 10.0 nm, for example. In addition, the size of metal fine particles is calculated by XRD measurement known in the art. For example, the size of platinum fine particles can be found by measuring XRD of an electrode catalyst and then calculating from the half width at full maximum of a peak corresponding to Pt (111) detected at approximately 40°.

Examples of a catalyst metal that is loaded on a conductive particle include platinum and platinum alloys. Examples of platinum alloys include an alloy of platinum and at least one type of transition metal such as cobalt, nickel, iron, copper, manganese, and vanadium, an alloy of platinum and at least one type of noble metal such as palladium, rhodium, iridium, gold, and ruthenium, and an alloy of platinum, one of the above transition metals, and one of the above noble metals. In addition, the concept of the term "metal" in the present invention includes not only an elemental metal comprising a single type of metal element, but also an alloy comprising two or more types of metal element.

According to an embodiment of the present invention, catalyst metal fine particles that have been loaded in advance on conductive particles and at least one further metal contained in an organic compound to be mixed are alloyed in the heat treatment step, so that an alloy having catalytic activity is formed. In this embodiment, a metal that has been loaded in advance on conductive particles is a metal such as platinum having its own catalytic activity. At least one further metal (hereinafter, referred to as "metal for alloying") contained in an organic compound is preferably at least one type of metal selected from the group consisting of the above transition metals and the above noble metals.

Catalyst metal fine particle-loaded conductive particles; that is, a starting material in the mixing step may be prepared by any method. As a preparation method, any known method for metal loading can be employed. An example of a loading method involves dissolving a metal salt or a metal complex in a solvent to prepare a solution, impregnating conductive particles with the solution, carrying out a reduction reaction using a reducing agent, and then causing precipitation of metal fine particles on the conductive particles so as to achieve loading. Another example of a loading method involves: a method comprising carrying out a reduction reaction using a reducing agent in a solution prepared by dissolving a metal salt or a metal complex in a solvent, preparing a colloid dispersion solution of metal fine particles, and then loading the metal fine particles on the conductive particles either by dispersing conductive particles in the thus obtained colloid dispersion solution, or by adding the thus obtained colloid dispersion solution to conductive particles; or a method comprising carrying out a reduction reaction while dispersing conductive particles in advance in the above solution, so as to carry out metal fine particle formation and loading, simultaneously.

Conductive particles on which alloy catalyst fine particles are loaded can also be used as a starting material in the mixing step. Such conductive particles are prepared by loading alloy catalyst fine particles formed via loading with two or more types of metal, reduction, and alloying.

After metal fine particle loading, conductive particles are dried by any method such as vacuum drying and can then be used for the method of the present invention.

The amount of a metal to be loaded is not particularly limited. For example, when metals include platinum, the amount of platinum to be loaded ranges from 10 wt% to 50 wt% based on the total weight of all metals and conductive particles. When metals include a transition metal, the amount of the transition metal to be loaded ranges from 1 wt% to 20 wt% based on the total weight of all metals and conductive particles.

2. Mixing step

The present invention is characterized by mixing conductive particles loaded with catalyst metal fine particles with an organic compound and then heat treating the thus obtained mixture under an inert gas atmosphere, so as to carbonize the organic compound.

In the present invention, the effect of suppressing the growth of catalyst metal fine particles is thought to be exerted because carbon generated via carbonization of an organic compound existing between metal fine particles limit the movement of metal fine particles. Hence, an organic compound to be used in the present invention is not particularly limited, as long as it is decomposed and carbonized at a heat treatment temperature (e.g., 450°C or higher).

A particularly preferable example of such organic compound is at least one compound selected from the group consisting of 2- methyl- 2, 4- pentane diol, a porphyrin compound, benzonitrile, perylene, and polyvinyl pyrrolidone. Examples of a porphyrin compound include 5, 10, 15, 20- Tetrakis (p- Methoxyphenyl) porphyrin (H2TMPP) and CoTMPP that is TMPP with cobalt coordinated therein.

The amount of an organic compound to be used herein is not particularly limited. For example, the amount ranges from 0.1 wt% to 10 wt% based on the weight of conductive particles loaded with catalyst metal fine particles.

When an organic compound is 2- methyl- 2, 4- pentane diol and the amount thereof ranges from 0.3 wt% to 2.0 wt% based on the weight of the conductive particles loaded with catalyst metal fine particles, the effect of suppressing the growth of the size of metal fine particles is increased. Particularly preferably, the amount of the organic compound ranges from 0.3 wt% to 1.5 wt%, since the catalytic activity of the finally obtained electrode catalyst can be enhanced.

A method for mixing conductive particles loaded with metal fine particles with an organic compound is not particularly limited. Preferably, the conductive particles are mixed with an organic compound dissolved in a solvent and then removing the solvent after mixing. In this embodiment, the conductive particles are impregnated with the organic compound. A solvent to be used herein is not particularly limited, as long as an organic compound can be dissolved therein. For example, ethanol, tetrahydrofuran (THF) or the like can be used.

The mixing step is preferably carried out under an inert gas atmosphere, such as nitrogen gas. In an embodiment in which metal fine particle-loaded conductive particles and the solution of an organic compound are mixed, and then a solvent is removed after mixing as described above, the solvent is preferably removed using a rotary evaporator or the like under an inert gas atmosphere.

In an embodiment of the present invention, an organic compound contains at least one type of metal for alloying, which is alloyed with the catalyst metal in the heat treatment step to give an alloy having catalytic activity. In this embodiment, a complex compound or the like of the metal for alloying as described previously in 1 above can be used as an organic compound. Specific examples of such organic compound containing a metal for alloying include a porphyrin complex and a phthalocyanine complex of a metal for alloying. The amount of an organic compound containing a metal for alloying (to be loaded) ranges from 0.1 wt% to 10 wt% based on the weight of the above conductive particles loaded with catalyst metal fine particles.

3. Heat treatment step

The heat treatment step comprises heat treating the mixture of metal fine particle-loaded conductive particles and the organic compound obtained in the mixing step under an inert gas atmosphere, so as to carbonize the organic compound. In the heat treatment step, alloying, stabilization of metal fine particles, and/or adhesion of metal fine particles to conductive particles, each of which is the original purpose of heat treatment, also proceed.

The heat treatment step is preferably carried out at a temperature between 450°C and 850°C. The time for heat treatment preferably ranges from 30 to 120 minutes.

Heat treatment is carried out under an atmosphere of an inert gas such as argon, nitrogen, or helium.

Examples

Preparation example 1.1: Impregnation of Pt/C catalyst with MPD and heat treatment

(i) Impregnation of Pt/C catalyst with MPD as a modifying agent

A stock solution of 2- methyl- 2, 4- pentanediol (MPD) in dried and deaerated ethanol was prepared as follows: Analytical grade ethanol was dried over molecular sieves and deaerated by purging with argon. 500 mg of analytical grade MPD was placed in a 500 ml volumetric flask. Afterwards, the flask was backfilled to the calibration mark with the dried and deaerated ethanol. The prepared stock solution was transferred into a glove box.

The impregnation of the catalyst described within this paragraph was carried out under inert argon atmosphere in a glove box to prevent spontaneous ignition of the reaction mixture. An amount of 2.0 g of the Pt/C catalyst with Pt-loading of 45wt% was weighed in and placed in a 250 ml Kjeldahl round-bottomed flask. An amount of 80 ml analytical grade dried and deaerated ethanol was added to the catalyst powder into the Kjeldahl flask. Afterwards, an amount of 20 ml of the previously prepared MPD/ethanol stock solution was added. The flask with the catalyst suspension was sealed and removed from the glove box.

The prepared catalyst in MPD/ethanol suspension was agitated ultrasonically for 30 min.

(ii) Drying by rotary evaporation under inert atmosphere

A suited rotary evaporator was inerted by alternate evaporation and purging with argon. After inerting, the Kjeldahl flask with the agitated catalyst suspension was connected to the rotary evaporator under argon counter flow. The ethanol solvent was removed at 200 mbar at a temperature of 50°C. After complete removal of the solvent, the flask was cooled down below room temperature using ice-bath and access of ambient atmosphere was allowed by slowly backfilling the rotary evaporator to normal pressure.

(iii) Heat treatment (pyrolysis) of the dried loaded sample under inert atmosphere

The dried sample of MPD loaded Pt/C-catalyst was placed inside of a horizontally aligned split-hinge quartz glass tube furnace. Argon 5.0 was used because of its higher gas displacement ability and superior inertness compared to $N_2$ of the same grade. The furnace was purged with argon gas at a flow rate of 7.5 l/min for 1 hour at room temperature before thermal treatment to remove all traces of oxygen from the catalyst sample. The gas flow rate was held constant at 7.5 l/min during all steps of the subsequent heat treatment. In a first step a heating ramp of 300 K/hour was applied until the furnace temperature reached 450°C. This temperature was kept constant for 60 min. Then, the temperature was further increased with a heating rate of 300 K/hour until the final pyrolysis temperature was reached. The final temperature was in a range from 500°C to 850°C. The catalyst sample was kept at this temperature for 30 min. Finally, the furnace was cooled down to room temperature within 90 min, while maintaining the argon gas flow. Air contact of the sample was allowed only after room temperature was reached. The heating ramps applied during the treatment are summarized in table 1.

## Table 1. Heating ramps applied during the heat treatments.

| | ramp 1 | | ramp 2 | | |
|---|---|---|---|---|---|
| start-temp. [°C] | heating rate [K/h] | hold time * [min] | heating rate [K/h] | hold time ** [min] | cool down to RT [min] |
| 25 | 300 | 60 | 300 | 30 | 90 |

\* at 450°C    \*\* at final pyrolysis temperature

Preparation example 1.2: Impregnation of Pt/C catalyst with H2TMPP and heat treatment

(i) Impregnation of Pt/C catalyst with H2TMPP as a modifying agent

An amount of 2.0 g of the Pt/C catalyst with Pt- loading of 45wt% was weighed in and placed in a 250 ml Kjeldahl round- bottomed flask. An amount of 127.2 mg of 5, 10, 15, 20- Tetrakis (p- Methoxyphenyl) porphyrin (H2TMPP) with purity 98 wt% was dissolved in 100 ml analytical grade dried and deaerated THF in a beaker and the solution was transferred to the catalyst powder into the Kjeldahl flask. The prepared catalyst in H2TMPP/THF suspension was agitated ultrasonically for 30 min.

(ii) Drying by rotary evaporation

A suited rotary evaporator was inerted by alternate evaporation and purging with argon. After inerting, the Kjeldahl flask with the agitated catalyst suspension was connected to the rotary evaporator under argon counter flow. The THF solvent was removed at 350 mbar at a temperature of 50°C. After rotating to dryness the flask with the powder was purged with argon 5.0 at 60°C to remove the THF-residues more completely and to overlay the material with an inert atmosphere. Finally, the material was cooled down allowing air contact only after reaching room temperature.

(iii) Heat treatment (pyrolysis) of the dried loaded sample under inert atmosphere

The dried powder of Pt/C catalyst loaded with H2TMPP was heat treated in a manner and under conditions similar to those of Preparation example 1.1 (iii).

Preparation example 1.3: Impregnation of Pt/C catalyst with PVP and heat treatment

(i) Impregnation of the Pt/C catalyst with PVP as a modifying agent

The impregnation of the catalyst described within this paragraph was carried out under inert argon atmosphere in a glove box to prevent spontaneous ignition of the reaction mixture. An amount of 2.0 g of the Pt/C catalyst with Pt-loading of 45wt% was weighted in and placed in a 250 ml Kjeldahl round-bottomed flask. An amount of 125 mg of Polyvinylpyrolidon K-30 (PVP) was dissolved in 100 ml analytical grade dried and deaerated ethanol in a beaker and the solution was transferred to the catalyst powder into the Kjeldahl flask. The flask with the catalyst suspension was sealed and removed from the glove box.
The prepared catalyst in PVP/ethanol suspension was agitated ultrasonically for 30 min.

(ii) Drying by rotary evaporation under inert atmosphere

The suspension of Pt/C catalyst in PVP/ethanol was dried in a manner and under conditions similar to those of Preparation example 1.1 (ii).

(iii) Heat treatment (pyrolysis) of the dried loaded sample under inert atmosphere

The dried powder (obtained in (ii) above) of Pt/C catalyst loaded with PVP was heat treated in a manner and under conditions similar to those of Preparation example 1.1 (iii).

Preparation example 1.4: Impregnation of Pt/C catalyst with CoTMPP and heat treatment

(i) Impregnation of the Pt/C catalyst with CoTMPP as a modifying agent

An amount of 2.0g of the Pt/C catalyst with Pt- loading of 45wt% was weighed in and placed in a 1000 ml Kjeldahl round- bottomed flask. An amount of 137.1 mg of 5, 10, 15, 20- Tetrakis (4- Methoxyphenyl)- 21H, 23H- porphyrin cobalt (II) (CoTMPP) with 98wt% purity was dissolved in 400 ml analytical grade dried and deaerated THF in a beaker and the solution was transferred to the catalyst powder into the Kjeldahl flask. The prepared catalyst in CoTMPP/THF suspension was agitated ultrasonically for 30 min.

(ii) Drying by rotary evaporation

The suspension of Pt/C catalyst in CoTMPP/THF was dried in a manner and under conditions similar to those of Preparation example 1.2 (ii).

(iii) Heat treatment (pyrolysis) of the dried loaded sample under inert atmosphere

The dried powder (obtained in (ii) above) of Pt/C catalyst loaded with CoTMPP was heat treated in a manner and under conditions similar to those of Preparation example 1.1 (iii).

Preparation example 1.5: Impregnation of Pt/C catalyst with benzonitrile and heat treatment

(i) Impregnation of the Pt/C catalyst with benzonitrile as a modifying agent

The impregnation of the catalyst described within this paragraph was carried out under inert argon atmosphere in a glove box to prevent spontaneous ignition of the reaction mixture. An amount of 2.0 g of the Pt/C catalyst with Pt-loading of 45wt% was weighed in and placed in a 250 ml Kjeldahl round-bottomed flask. An amount of 124.3 mg of analytical grade benzonitrile was mixed into 100 ml analytical grade dried and deaerated ethanol in a beaker and the solution was transferred to the catalyst powder into the Kjeldahl flask. The flask with the catalyst suspension was sealed and removed from the glove box.
The prepared catalyst in benzonitrile/ethanol suspension was agitated ultrasonically for 30 min.

(ii) Drying by rotary evaporation under inner atmosphere

The suspension of Pt/C catalyst in benzonitrile/ethanol was dried in a manner and under conditions similar to those of Preparation example 1.1 (ii).

(iii) Heat treatment (pyrolysis) of the dried loaded sample under inert atmosphere

The dried powder (obtained in (ii) above) of Pt/C catalyst loaded with benzonitrile was heat treated in a manner and under conditions similar to those of Preparation example 1.1 (iii).

Preparation example 1.6: Impregnation of Pt/C catalyst with perylene and heat treatment

(i) Impregnation of the Pt/C catalyst with perylene as a modifying agent

The impregnation of the catalyst described within this paragraph was carried out under inert argon atmosphere in a glove box to prevent spontaneous ignition of the reaction mixture. An amount of 2.0 g of the Pt/C catalyst with Pt-loading of 45wt% was weighed in and placed in a 500 ml Kjeldahl round-bottomed flask. An amount of 124.3 mg of analytical grade perylene was dissolved into 250 ml analytical grade dried and deaerated ethanol in a beaker and the solution was transferred to the catalyst powder into the Kjeldahl flask. The flask with the catalyst suspension was sealed and removed from the glove box.
The prepared catalyst in perylene/ethanol suspension was agitated ultrasonically for 30 min.

(ii) Drying by rotary evaporation under inner atmosphere

The suspension of Pt/C catalyst in perylene/ethanol was dried in a manner and under conditions similar to those of Preparation example 1.1 (ii).

(iii) Heat treatment (pyrolysis) of the dried loaded sample under inert atmosphere

The dried powder (obtained in (ii) above) of Pt/C catalyst loaded with perylene was heat treated in a manner and under conditions similar to those of Preparation example 1.1 (iii).

Preparation example 1.7 (control): Heat treatment of Pt/C catalyst

The Pt/C catalyst with Pt-loading of 45 wt% was heat treated in a manner and under conditions similar to those of Preparation example 1.1 (iii), so that a control sample of the Pt/C catalyst was prepared.

Test 1: Evaluation of platinum particle size

The size of loaded platinum particles of the platinum-loaded electrode catalyst obtained above was measured. The size of the platinum particles was measured by measuring XRD of the carbon powders of each sample and then calculating the size using the following Scherrer equation from the full width at half maximum (FWHM) of a peak corresponding to Pt (111) detected at approximately 40° based on the thus obtained XRD profiles.

## Equation 1

$$G = \frac{K\,\lambda}{B\cos\theta}$$

with K = 0.5, $\lambda$ = 1.5406 Å and $B = \sqrt{K_1^2 - K_2^2}$ ($K_1$ - FWHM of the sample and $K_2$ - FWHM of the Bruker diffractometer

$K_2 = 0.192\dfrac{\pi}{180°}$ )

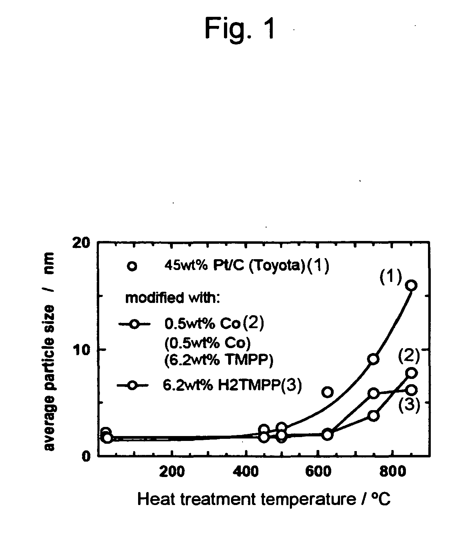

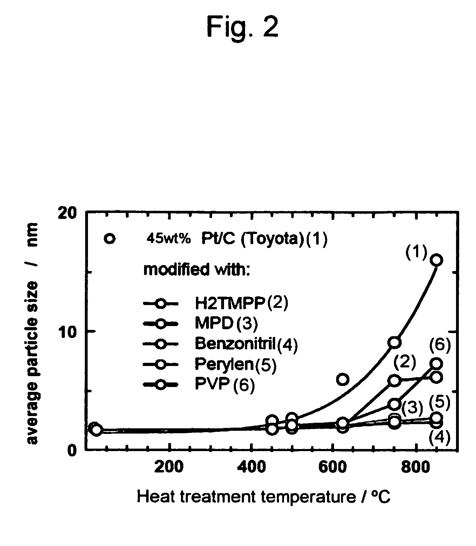

XRD measurement was carried out at $2\theta$ within the range from 20° to 40° at intervals of 0.0025°. The thus calculated sizes of platinum particles are shown in Figures 1 and 2.

It was revealed by the results shown in Figures 1 and 2 that in the case of platinum-loaded electrode catalysts loaded with various organic compounds, the size increase of platinum particles was suppressed even when heat treatment had been carried out under high temperature conditions.

Test 2: Evaluation of catalytic activity

The catalytic activity was evaluated for a sample prepared in Preparation example 1.4 by heat treating the platinum-loaded electrode catalyst loaded with CoTMPP at 450°C to 750°C, a sample prepared in Preparation example 1.2 by heat treating the platinum-loaded electrode catalyst loaded with H2TMPP at 450°C to 850°C, and a sample prepared in Preparation example 1.7 by heat treating the platinum-loaded electrode catalyst not loaded with an organic compound at room temperature and 450°C to 750°C.

The catalytic activity of the samples was characterized via cyclic voltammetry (CV) and rotating disk electrode (RDE) measurements. For both techniques the same conventional one-compartment electrochemical glass cell was used. A mercury sulfate electrode served as reference and a platinum wire as counter electrode. The catalyst powder was attached onto a working electrode, which consists of a PTFE surrounded glassy carbon (GC) rod with a diameter of 5 mm.

The electrode was prepared as follows: 1 mg of the catalyst sample was ultrasonically suspended in 200 µl of a 0.2% Nafion®-solution (Aldrich). A precise amount of this suspension was then transferred onto the GC electrode and dried in air at 60°C.

The so prepared electrode has been cycled in a potential range from 1.5 to 0 V (NHE) ($N_2$ purged 0.5 M $H_2SO_4$ electrolyte) until the Cyclic Voltammogram (CV) curve showed a steady state characteristics (ca. 20 scans). Subsequently, the electrode was used in Rotating Disc Electrode (RDE) experiments in $O_2$ saturated 0.5 M $H_2SO_4$ electrolyte at room temperature.

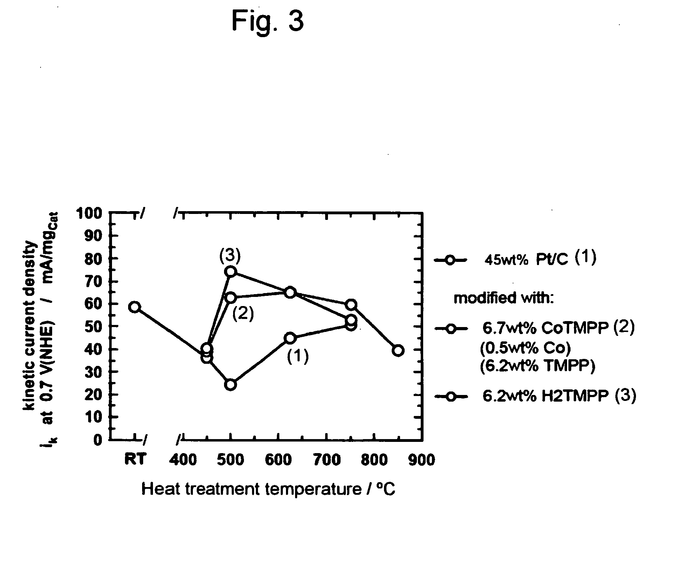

The results are shown in Figure 3. It was confirmed that the catalytic activity in an oxygen reduction reaction was higher in the case of impregnation with the organic compound before high temperature treatment than that in the case of no impregnation with the organic compound before high temperature treatment.

Preparation example 2.1: Impregnation of Pt/C catalyst with MPD and heat treatment

(i) Impregnation of Pt/C catalyst with MPD as a modifying agent

A stock solution of 2- methyl- 2, 4- pentanediol (MPD) in dried and deaerated ethanol was prepared as follows: Analytical grade ethanol was dried over molecular sieves and deaerated by purging with argon. 500 mg of analytical grade MPD was placed in a 500 ml volumetric flask. Afterwards, the flask was backfilled to the calibration mark with the dried and deaerated ethanol. The prepared stock solution was transferred into a glove box.

The impregnation of the catalyst described within this paragraph was carried out under inert argon atmosphere in a glove box to prevent spontaneous ignition of the reaction mixture. An amount of 2.0 g of the Pt/C catalyst with Pt-loading of 45wt% was weighed in and placed in a 250 ml Kjeldahl round-bottomed flask. An amount of 80 ml analytical grade dried and deaerated ethanol was added to the catalyst powder into the Kjeldahl flask. Afterwards, an amount of 20 ml of the previously prepared MPD/ethanol stock solution was added. The flask with the catalyst suspension was sealed and removed from the glove box.

The prepared catalyst in MPD/ethanol suspension was agitated ultrasonically for 30 min.

As described above, the Pt/C catalyst (platinum-loaded carbon particles) was loaded with 1 wt% MPD, wherein the percentage value of MPD was calculated on the basis of the weight of the Pt/C catalyst.

Samples were each prepared by MPD loading of 0 wt%, 0.5 wt%, 2.0 wt%, or 5 wt% MPD onto the Pt/C catalyst (platinum-loaded carbon particles) according to procedures similar to the above, except that, instead of using 20 ml of the above MPD/ethanol stock solution, no MPD/ethanol stock solution was used or 10 ml, 40 ml, or 100 ml of the stock solution was used. The percentage values of MPD were calculated on the basis of the weight of the Pt/C catalyst.

(ii) Drying by rotary evaporation under inert atmosphere

A suited rotary evaporator was inerted by alternate evaporation and purging with argon. After inerting, the Kjeldahl flask with the agitated catalyst suspension was connected to the rotary evaporator under argon counter flow. The ethanol solvent was removed at 200 mbar at a temperature of 50°C. After complete removal of the solvent the flask was cooled down below room temperature using ice-bath and access of ambient atmosphere was allowed by slowly backfilling the rotary evaporator to normal pressure.

(iii) Heat treatment (pyrolysis) of the dried loaded sample under inert atmosphere

The dried sample of MPD loaded Pt/C-catalyst was placed inside of a horizontally aligned split-hinge quartz glass tube furnace. Argon 5.0 was used because of its higher gas displacement ability and superior inertness compared to $N_2$ of the same grade. The furnace was purged with argon gas at a flow rate of 7.5 l/min for 1 hour at room temperature before thermal treatment to remove all traces of oxygen from the catalyst sample. The gas flow rate was held constant at 7.5 l/min during all steps of the subsequent heat treatment. In a first step a heating ramp of 300 K/hour was applied until the furnace temperature reached 450°C. This temperature was kept constant for 60 min. Then, the temperature was further increased with a heating rate of 300 K/hour until the final pyrolysis temperature was reached. The final temperature was in a range from 500°C to 850°C (500°C, 625°C, 750°C and 850°C). The catalyst sample was kept at this temperature for 30 min. Finally, the furnace was cooled down to room temperature within 90 min, while maintaining the argon gas flow. Air contact of the sample was allowed only after room temperature was reached. The heating ramps applied during the treatment are summarized in table 2.

## Table 2. Heating ramps applied during the heat treatments.

| start-temp. [°C] | ramp 1 | | ramp 2 | | cool down to RT [min] |
|---|---|---|---|---|---|
| | heating rate [K/h] | hold time * [min] | heating rate [K/h] | hold time ** [min] | |
| 25 | 300 | 60 | 300 | 30 | 90 |

\* at 450°C      \*\* at final pyrolysis temperature

Test 3: Evaluation of platinum particle size

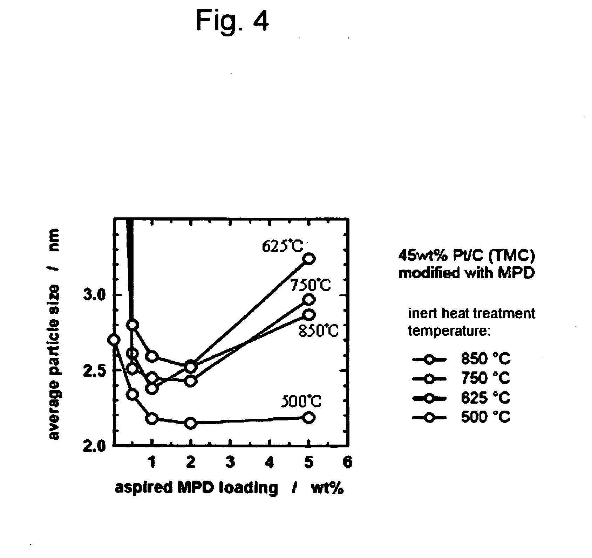

The size of loaded platinum particles of the platinum-loaded electrode catalyst obtained in Preparation example 2.1 was measured by procedures similar to those described in Test 1. The thus calculated sizes of platinum particles are shown in Figure 4.

In addition, the sizes of platinum particles of 0 wt% MPD-loaded samples heat treated at temperatures of 625°C, 750°C, and 850°C (outside the range of the graph of Figure 4), were 6.5 nm, 9.5 nm, and 17.5 nm, respectively.

Based on the results in Figure 4, it was revealed that the amount of MPD loaded ranging from 0.5 wt% to 2.0 wt% resulted in suppressed size increase of platinum particles even when heat treatment had been carried out at 625°C or higher.

Test 4: Evaluation of catalytic activity

The catalytic activity was evaluated by procedures similar to those in Test 2 for the samples of platinum-loaded electrode catalysts with MPD loading of 0 wt%-5 wt% heat treated at 750°C in Preparation example 2.1.

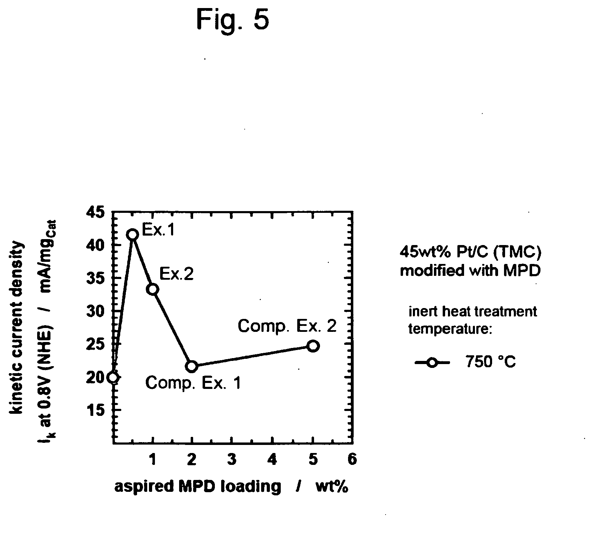

The results are shown in Figure 5. It was confirmed that when the amount of MPD loaded was 0.5 wt% (Example 1) or 1.0 wt% (Example 2), catalytic activity in an oxygen reduction reaction was high. On the other hand, when the amount of MPD loaded was 2.0 wt% (Comparative example 1) or 5.0 wt% (Comparative example 2), catalytic activity in an oxygen reduction reaction was not improved compared with that in a case where no MPD had been loaded.

**Claims**

1.   A method for producing an electrode catalyst for a fuel cell, comprising the steps of:

    mixing conductive particles loaded with catalyst metal fine particles with an organic compound wherein the organic compound is 2-methyl-2,4-pentane diol, and the amount thereof ranges from 0.3 wt% to 1.5 wt% based on the weight of the conductive particles loaded with catalyst metal fine particles; and
    heat treating the mixture formed in the mixing step under an inert gas atmosphere, so as to carbonize the organic compound.

2.   The method according claim 1, wherein the heat treatment step is carried out at a temperature between 450°C and 850°C.

3.   The method according to claim 1 or 2, wherein the organic compound contains at least one further catalyst metal.

4.   The method according to any one of claims 1 to 3, wherein the mixing step comprises mixing the conductive particles loaded with catalyst metal fine particles with the organic compound dissolved in a solvent and removing the solvent after mixing.

**Patentansprüche**

1.   Verfahren zum Herstellen eines Elektrodenkatalysators für eine Brennstoffzelle, das die folgenden Schritte aufweist:

    Mischen leitfähiger Partikel, die mit Metallkatalysator-Feinstaub aufgeladen sind, mit einer organischen Verbindung, wobei die organische Verbindung 2-Methyl-2,4-Pentan-Diol ist und seine Menge auf Basis des Gewichts der leitfähigen Partikel, die mit Metallkatalysator-Feinstaub aufgeladen sind, zwischen 0,3 wt% und 1,5 wt% beträgt; und
    thermisches Behandeln der in dem Mischschritt gebildeten Mischung in einer Inertgasatmosphäre, so dass die organische Verbindung karbonisiert wird.

2.   Verfahren nach Anspruch 1, wobei der Schritt zur thermischen Behandlung bei einer Temperatur zwischen 450°C und 850°C durchgeführt wird.

3.   Verfahren nach Anspruch 1 oder 2, wobei die organische Verbindung zumindest einen weiteren Metallkatalysator beinhaltet.

4.   Verfahren nach einem der Ansprüche 1 bis 3, wobei der Mischschritt das Mischen der leitfähigen Partikel, die mit Metallkatalysator-Feinstaub aufgeladen sind, mit der organischen Verbindung, die in einem Lösungsmittel gelöst ist und das Entfernen des Lösungsmittels nach dem Mischen beinhaltet

**Revendications**

1.   Procédé destiné à produire un catalyseur d'électrode pour une pile à combustible, comprenant les étapes qui consistent :

    à mélanger des particules conductrices chargées de particules fines de métal catalyseur avec un composé organique où le composé organique est le 2-méthyl-2,4-pentane diol, et la quantité de celui-ci se trouve dans la plage allant de 0,3% en poids à 1,5% en poids sur la base du poids des particules conductrices chargées de particules fines de métal catalyseur ; et

à traiter thermiquement le mélange formé dans l'étape de mélange sous une atmosphère de gaz inerte, de façon à carboniser le composé organique.

2. Procédé selon la revendication 1, dans lequel l'étape de traitement thermique est exécutée à une température comprise entre 450°C et 850°C.

3. Procédé selon la revendication 1 ou 2, dans lequel le composé organique contient au moins un autre métal catalyseur.

4. Procédé selon l'une quelconque des revendications 1 à 3, dans lequel l'étape de mélange comprend le fait de mélanger les particules conductrices chargées de particules fines de métal catalyseur avec le composé organique dissout dans un solvant et d'éliminer le solvant après le mélange.

# Fig. 1

# Fig. 2

# Fig. 3

# Fig. 4

# Fig. 5

45wt% Pt/C (TMC)
modified with MPD

inert heat treatment
temperature:

—o— 750 °C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004335328 A
- JP 2002289208 A
- JP 2001068120 A
- JP 2001093531 A
- JP 2003100306 A
- WO 2004110930 A
- WO 2009075037 A